# EUROPEAN PATENT APPLICATION

(11) **EP 2 675 179 A2**
(43) Date of publication of application: **18.12.2013**
(21) Application number: 13152542.0
(22) Date of filing: 24.01.2013
(51) Int. Cl.: H04N 21/258

(54) **Server-based profile generating and management methods, system and apparatus**

(30) Priority: 13.06.2012 KR 20120063341
(71) Applicant: Samsung Electronics Co., Ltd., Gyeonggi-do 443-742 (KR)
(72) Inventor: Konrad, Rozeslaniec, 24-100 Pulawy (PL)
(74) Representative: Bray, Richard Anthony

(57) **Abstract**

A server-based profile generating and managing system, method and apparatus are provided. The system includes a stream capture server (100) which captures a received broadcasting signal stream to generate profile data and transmits the profile data to a web server (200), the web server which receives the profile data from the stream capture server, updates the profile data in a new version, and transmits the profile data if requested by a broadcasting reception apparatus (300), and the broadcasting reception apparatus which requests and receives a selected profile data to and from the web server and sets a service program based on the received profile data.

## Description

### CROSS-REFERENCE TO RELATED APPLICATION

This application claims priority from Korean Patent Application No. 10-2012-0063341, filed on June 13, 2012, in the Korean Intellectual Property Office, the disclosure of which is incorporated herein by reference in its entirety.

### BACKGROUND

### 1. Field

Apparatuses and methods consistent with exemplary embodiments relate to a profile managing method, system, and apparatus, and more particularly, to a server-based profile generating method, a method and system of downloading and managing a profile in a broadcasting reception apparatus, a system, and an apparatus used in a profile managing system.

### 2. Description of the Related Art

An operation performed in a current broadcasting digital television (TV) field or a TV receiver is defined by a standard system. For example, the standard of Digital Video Broadcasting (DVB) is used in Europe, the standard of Advanced Television Systems Committee (ATSC) is used in the United States, the standard of Integrated Services Digital Broadcasting (ISDB) is used in Japan, and the like. In general, the standard defines a complete broadcasting system in a physical transmission layer through a data link layer and the transport layer and often includes a selective application program layer. In particular, the specification for the signal format defines means configured to transmit information for a service available in a broadcasting network. For example, the DVB signal format is defined as DVB service information (SI) and is based on the Moving Picture Expert Group (MPEG)-2 standard. Regardless of the disclosed complicated signal standard, there are various methods of applying the undefined parts and the specific broadcasting network standard. However, providers do not generally fully conform to the standard (or the SI guideline). Therefore, in order to implement the support for the specific network in a DVB compatible receiver (or other compatible receivers), considerable effort is required to conform to the standard and be suitable for execution. The software set for implementing the specific cases is called an operator profile. When the user selects the support for the specific network when setting the receiver, the specific operation is activated. However, it takes a long time to develop the operator profile and the receiver software needs to be updated. In particular, if it is very difficult and becomes expensive to update the receivers which have been already installed in fields.

The above-described problems are particularly serious to the satellite digital television (DTV) operator because many satellite TV networks are installed when the current standard is not completely defined and is not stabilized. Since there are many receivers which have been already installed, the signaling in such a network has a problem that cannot be solved simply. Updating a channel list and other information is necessary to tune the specific transponder, but the updating is not performed when the user is watching TV because of the amount of power consumed.

As an attempt to overcome these problems, there is provided an operator profile function including a version 1.3 of the common interface plus (CI+) standard. In this case, the detailed mechanism of all networks is implemented with an external hardware. However, the solution requires a more complete CI+ module software and there are limitations in the operation of this solution. Further, there are some restrictions in the CI+ solutions autonomously. For example, the electronic program guide (EPG) application program allows the network specific function related to the program guide to be built in the CI+ computer aided manufacturing (CAM) module. However, the specific function is not integrated with the other functions of the receiver, such as a scheduled recording function in the EPG application program.

### SUMMARY

One or more exemplary embodiments may overcome the above disadvantages and other disadvantages not described above. However, it is understood that one or more exemplary embodiments are not required to overcome the disadvantages described above, and may not overcome any of the problems described above.

According to the present invention there is provided an apparatus and method as set forth in the appended claims. Other features of the invention will be apparent from the dependent claims, and the description which follows.

The exemplary embodiments provide a server-based profile generating method, a method and system of downloading and managing a profile in a broadcasting reception apparatus, a system, and an apparatus used in a profile managing system

According to an aspect of an exemplary embodiment, there is provided a stream capture server. The stream capture server may include a receiver which receives a broadcasting signal stream; a controller which captures the broadcasting signal stream to detect information for a service profile and generates profile data using the detected information; and a transmitter which transmits the generated profile data to a web server.

The generated profile data may include at least one of channel list information, a channel number, a profile name, a version, a service providing parameter, a service number, EPG location information, detailed information of EPG data, and a software upgrade channel location.

The stream capture server may further include an input unit which receives a command for defining a new profile. The controller may classify information for the new profile according to a definition of the new profile to generate new profile data when the command is received.

According to another aspect of an exemplary embodiment, there is provided a web server. The web server may include: a communication unit which receives profile data from a stream capture server which detects information for a service profile from a broadcasting signal stream to generate the profile data; a storage which stores the received profile data; and a controller which transmits a profile list for the profile data stored in the storage to a broadcasting reception apparatus when a transmission request for the profile list is received from the broadcasting reception apparatus and transmits selected profile data to the broadcasting reception apparatus when the profile data included in the profile list is selected in the broadcasting reception apparatus.

According to another aspect of an exemplary embodiment, there is provided a broadcasting reception apparatus. The broadcasting signal reception apparatus may include: a signal receiver which receives a broadcasting signal; a signal processor which processes the received broadcasting signal; a communication unit which requests and receives a list of profiles to and from a web server and requests profile data of a selected profile from the web server when at least one profile is selected on the list of profiles; a storage which stores received profile data when the profile data is received through the communication unit; and a controller which sets a service program based on the storage profile data.

The controller of the broadcasting reception apparatus may generate a service database including at least one of a service parameter, a tuning parameter, and an installed data version based on the profile data. Further, the controller of the broadcasting reception apparatus may check whether a previously installed profile data has changed and updates the profile data if the previously installed profile data has changed. The updating the profile data may be performed while the broadcasting signal is received in the broadcasting reception apparatus.

The communication unit of the broadcasting reception apparatus may use an external apparatus which is connectable to an Internet as an Internet gateway.

The profile data stored in the storage of the broadcasting reception apparatus may include at least one of channel list information, a channel number, a profile name, a version, a service providing parameter, a service number, EPG location information, detailed information of EPG data, and a software upgrade channel location.

According to another aspect of an exemplary embodiment, there is provided a profile managing system. The profile managing system may include: a stream capture server which captures a received broadcasting signal stream to generate profile data and transmits the profile data to a web server; the web server which receives the profile data from the stream capture server, updates the profile data in a new version, and transmits the profile data if requested by a broadcasting reception apparatus; and the broadcasting reception apparatus which requests and receives a selected profile data to and from the web server and sets a service program based on the received profile data.

According to another aspect of an exemplary embodiment, there is provided a method of generating profile data. The method may include: receiving a broadcasting signal stream; capturing the broadcasting signal stream to detect information for a service profile and generating profile data using the detected information; and transmitting the profile data to a web server. The method may further include receiving a command for defining a new profile; and classifying the information for the service profile according to the definition for the new profile to generate new profile data when the command is received.

According to another aspect of an exemplary embodiment, there is provided a method of managing a profile based on a server. The method may include: capturing a broadcasting signal stream received in a stream capture server to generate profile data and transmitting the generated profile data to a web server; receiving the generated profile data from the stream capture server, updating the received profile data to a new version, and transmitting the profile data if requested by a broadcasting reception apparatus; and requesting and receiving selected profile data to and from a web server, and setting a service program based on the received profile data.

As described above, according to the various exemplary embodiments, it is not necessary to correct software of a broadcasting reception apparatus and it is possible to use the software in a previously installed broadcasting apparatus.

In addition, it is possible to add and change a profile in the broadcasting reception apparatus while the broadcast is being watched by the user.

Additional aspects and advantages of the exemplary embodiments will be set forth in the detailed description, will be obvious from the detailed description, or may be learned by practicing the exemplary embodiments.

### BRIEF DESCRIPTION OF THE DRAWINGS

The above and/or other aspects will be more apparent by describing in detail exemplary embodiments, with reference to the accompanying drawings, in which:

FIG. 1 is a view illustrating a server-based profile managing system according to an exemplary embodiment;

FIG. 2 is a block diagram illustrating a stream capture server according to an exemplary embodiment;

FIG. 3 is a detailed block diagram illustrating a stream capture server according to an exemplary embodiment;

FIG. 4 is a block diagram illustrating a web server according to an exemplary embodiment:

FIG. 5 is a block diagram illustrating a broadcasting reception apparatus according to an exemplary embodiment;

FIG. 6 is a detailed block diagram illustrating a broadcasting reception apparatus according to an exemplary embodiment;

FIG. 7 is a flowchart illustrating a method of generating profile data in a stream capture server according to an exemplary embodiment;

FIG. 8 is a flowchart illustrating a method of managing profile data in a web server according to an exemplary embodiment;

FIG. 9 is a flowchart illustrating a method of using profile data in a broadcasting reception apparatus according to an exemplary embodiment; and

FIG. 10 is a flowchart illustrating control of a server-based profile managing system according to an exemplary embodiment.

### DETAILED DESCRIPTION OF THE EXEMPLARY EMBODIMENTS

Hereinafter, exemplary embodiments will be described in more detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

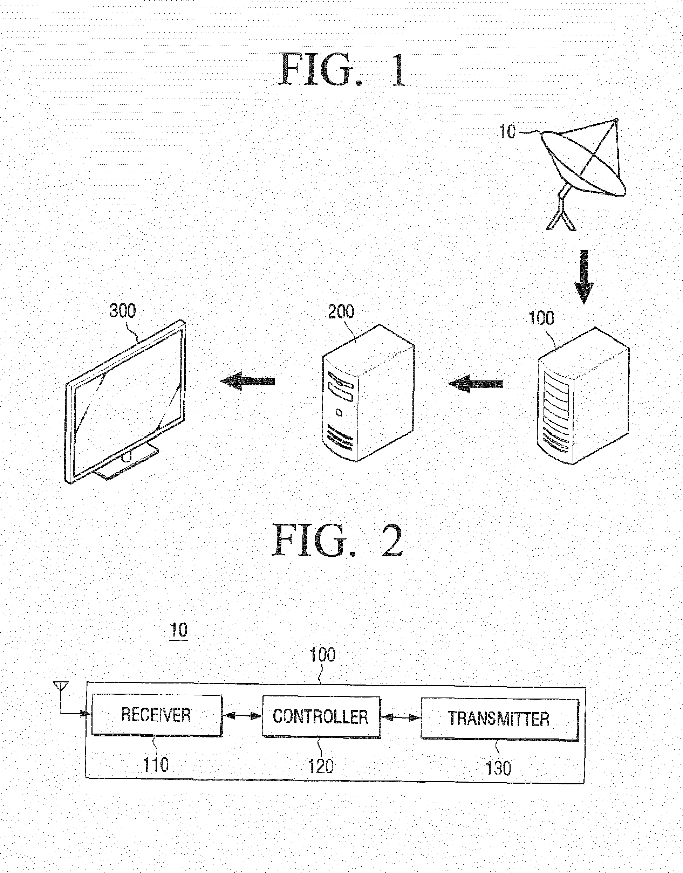

FIG. 1 is a view illustrating a server-based profile managing system according to an exemplary embodiment.

As shown in FIG. 1, the server-based profile managing system includes a stream capture server 100, a web server 200, and a broadcasting reception apparatus 300. The stream capture server 100 and the web server 200 may be a general personal computer (PC) and the broadcasting reception apparatus 300 may include, for example, all terminals which include a TV and receive and process a broadcasting signal, such as a mobile phone, a PC, a laptop computer, a tablet, an electronic book, a digital frame, a MP3 player, a personal digital assistant (PDA), a kiosk, and a set top box.

The stream capture server 100, which is directly connected to an antenna 10, periodically performs a signal stream capture job related to all profiles. A specific signal to be captured is specified for each profile. Examples of the specific signal include a frequency, a symbol rate, and other parameters. Next, software in the server processes a stream for each profile to generate profile data. The profile data may include at least one selected from a group including channel list information, a channel number, a profile name, a version, a service providing parameter, a service number, EPG location information, detailed information of EPG data, and a software upgrade channel location. The same data may be dynamically found by a receiver, which performs a network specific installation procedure according to an operator specification in a constant condition. Data generated for each profile may be revised and opened in the web server 200. Profile data in the web server 200 may be downloaded by a client through a standard Internet protocol.

The broadcasting reception apparatus 300 performs the role of the client. The broadcasting reception apparatus 300 accesses data in the web server 200 through a standard web protocol, for example, hypertext transfer protocol (HTTP) or simple object access protocol (SOAP). When the user selects one of the web profiles, profile data is downloaded in a server and a service application program related to the web profile is installed based on the downloaded profile data. The service application program may be a channel list or an EPG application program. When the service application program is included in the program definition, other kinds of data may be used. Then, while the user is watching a broadcast, the broadcasting reception apparatus 300 may periodically check whether there is a change to a profile data version and will then update data appropriately.

FIG. 2 is a block diagram of a stream capture server according to an exemplary embodiment.

A stream capture server 100 includes a receiver 110, a controller 120, and a transmitter 130. The receiver 110 receives a broadcasting signal from an antenna 10.

The controller 120 periodically performs an operation of capturing a signal stream for all profiles from the received broadcasting signal. The number of profiles may be one or more. The captured specific signal is a signal corresponding to each profile. After the controller 120 performs the capturing operation, the controller 120 performs stream processing for generating profile data and generates the profile data for each profile. The transmitter 130 transmits the generated profile data to the web server.

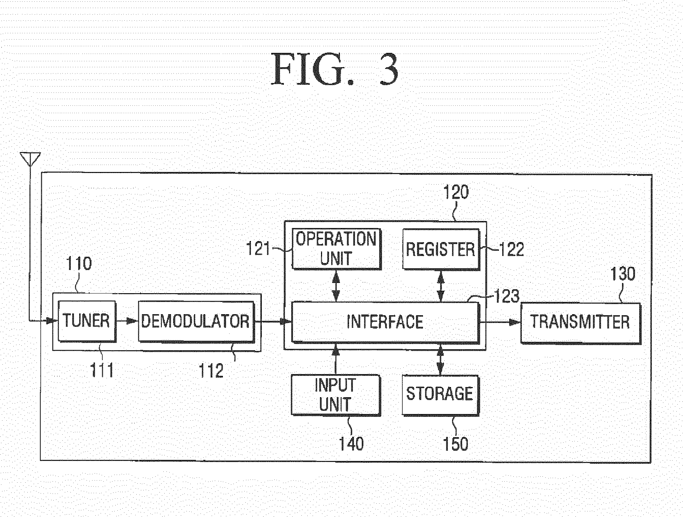

FIG. 3 is a detailed block diagram of the stream capture server according to an exemplary embodiment. The receiver 110 includes a tuner 111 and a demodulator 112. The tuner 111 is a tuning device which selects a required radio wave according to a frequency of a radio wave to be received. The demodulator 112 demodulates a modulated signal into an original signal. That is, the demodulator 112 separates the original signal from a carrier wave used to send the radio wave.

The controller 120 includes an operation unit 121, a register 122, and an interface 123. The operation unit 121 captures a signal stream using the received broadcasting signal and generates profile data using the captured signal stream. The register 122 is a storage device storing predetermined information for a smoothing operation of the operation unit 121. The broadcasting signal received in the receiver 110, the profile data generated in operation unit 121, information temporarily stored in register 122, and the like are provided to the required module through the interface 123. The generated profile data is transmitted to the web server 200 through the transmitter 130.

The stream capture server 100 may further include an input unit 140 and a storage 150. The input unit 140 may receive a command for defining a new profile from outside of the stream capture server 100. When the command is received, the operation unit 121 may classify information for the profile from the captured broadcasting signal stream according to the definition for the new profile and generate new profile data. A server-side script may be used to add the profile. The server-side script is technology in which the user's request is processed by a script executed in the server. The server-side script may define a response based on user's requirements, access privileges, and a query for a data storage site. The server-side script may be developed with a high-level language and may use a library. The generated new profile data may be transmitted to the transmitter 130 and the web server 200 through the interface 122. The storage 150 may store the captured broadcasting signal stream, a profile list, the generated profile data, and the like. The stored information may be deleted periodically or may be deleted when necessary.

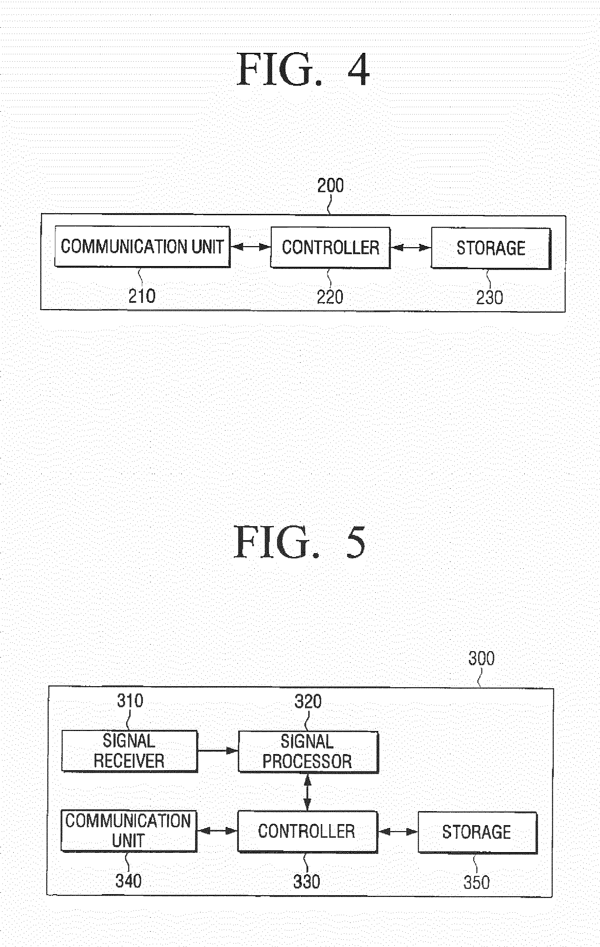

FIG. 4 is a block diagram of a web server according to an exemplary embodiment.

A web server 200 includes a communication unit 210, a controller 220, and a storage 230. The communication unit 210 receives profile data from the stream capture server 100 and transmits a profile list or profile data based on a request of the broadcasting reception apparatus 300. The reception of the profile data from the web server 200 or the transmission of the profile data to the broadcasting reception apparatus 300 may be performed by a standard web protocol, such as, for example, HTTP or SOAP.

The storage 230 stores the transmitted profile data. For example, the storage may include a built-in memory, such as a hard disc drive (HDD), or a solid state disc (SDD) or in some cases, may include an external memory, such as a secure digital (SD) card, a universal serial bus (USB) memory, or a memory stick. Alternatively, the storage 230 may include an external apparatus, such as a cloud server.

The controller 220 controls an operation of transmitting a profile list for the profile data stored in the storage 230 when a transmission request of the profile list is received from the broadcasting reception apparatus, and controls an operation of transmitting selected profile data to the broadcasting reception apparatus 300 when the profile data included in the profile list is selected by the broadcasting reception apparatus 300. Further, the controller 220 executes a command which causes the profile data transmitted from the stream capture server 100 to be stored in the storage 230, and checks whether or not the transmitted data has changed when data which is the same as the pre-stored profile data, is transmitted and updates the profile data when the transmitted data has changed.

FIG. 5 is a block diagram of a broadcasting reception apparatus.

A broadcasting reception apparatus 300 includes a signal receiver 310, a signal processor 320, a controller 330, a communication unit 340, and a storage 350. The signal receiver 310 receives a broadcasting signal, and the signal processor 320 processes the received broadcasting signal.

The broadcasting reception apparatus, which is initially installed, requests and receives a profile list to and from the web server 200 through the communication 340. When at least one profile on the profile list is selected, the broadcasting reception apparatus 300 receives the selected profile data through the communication unit 340. The storage 350 stores the downloaded profile data. The controller 330 controls the above-described operation, instructs each module, which performs each operation, to perform the corresponding operation, and sets a corresponding service program according to the downloaded profile data. For example, in the case of the EPG profile, the broadcasting reception apparatus may download EPG profile data and then set an EPG application program which can execute the downloaded EPG profile data in a corresponding broadcasting reception apparatus. Further, when the profile is changed periodically as a result of comparing the previously installed profile and a profile stored in the web server corresponding thereto, the broadcasting reception apparatus may update the profile data installed in the broadcasting reception apparatus 300. The broadcasting reception apparatus 300 may periodically check changes to the profile data and update the profile data while the user is watching the broadcast.

After the service program is set, the profile data stored in the storage 350 is maintained as it is or deleted except for necessary information.

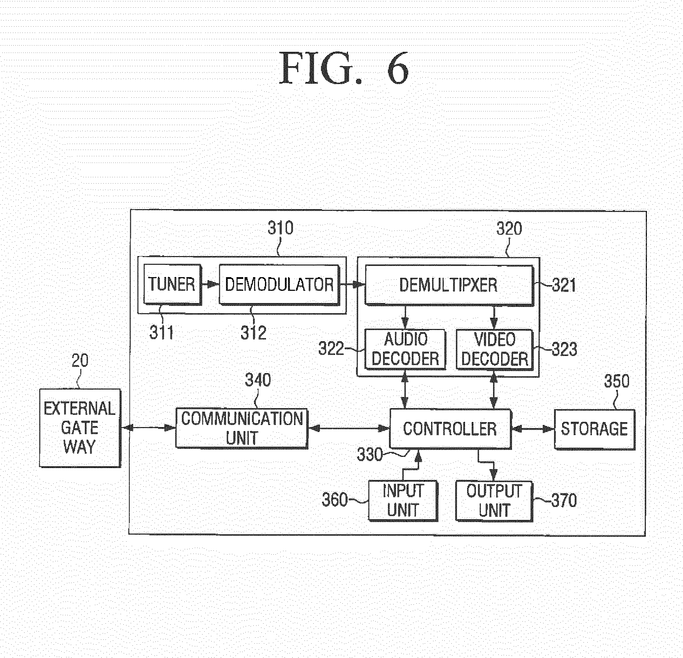

FIG. 6 is a detailed block diagram of the broadcasting reception apparatus according to an exemplary embodiment.

The signal receiver 310 includes a tuner 311 and a demodulator 312. The tuner 311 is a tuning device configured to select a required radio wave according to a frequency of a radio wave to be received. The demodulator 312 serves to demodulate a modulated signal into an original signal. That is, the demodulator 312 separates the original signal from a carrier wave used to send the radio wave.

The signal processor 320 includes a demultiplexer 321, an audio decoder 322, and a video decoder 323. The demultiplexer 321 separates an audio signal and a video signal from the broadcasting signal provided from the signal receiver 310. The separated audio signal is a compressed digital audio signal and the audio decoder 322 restores the compressed digital audio signal and converts the restored audio signal into an analog audio signal. Similarly, the separated video signal is a compressed digital video and the video decoder 323 restores the compressed digital video signal and converts the restored video signal into an analog video signal.

The controller 330, communication unit 340, and storage 350 perform the same operation as described in FIG. 4. Further, the broadcasting reception apparatus 300 may receive a signal for selecting a profile from the user via input unit 360. The communication unit 340 requests and downloads the profile data selected by the user to and from the web server 200. The output unit 370, which can be a display, may display a list of profiles opened in the web server 200 to the user when the broadcasting reception apparatus 300 is intially installed.

In addition, when the broadcasting reception apparatus 300 cannot directly connect to the Internet, another external apparatus may be used as an external Internet gateway 20. The external apparatus can be a smart phone which enables an Internet connection, a PC, a laptop computer, and a tablet. The broadcasting reception apparatus 300 and the external apparatus may be connected in a wired or wireless manner.

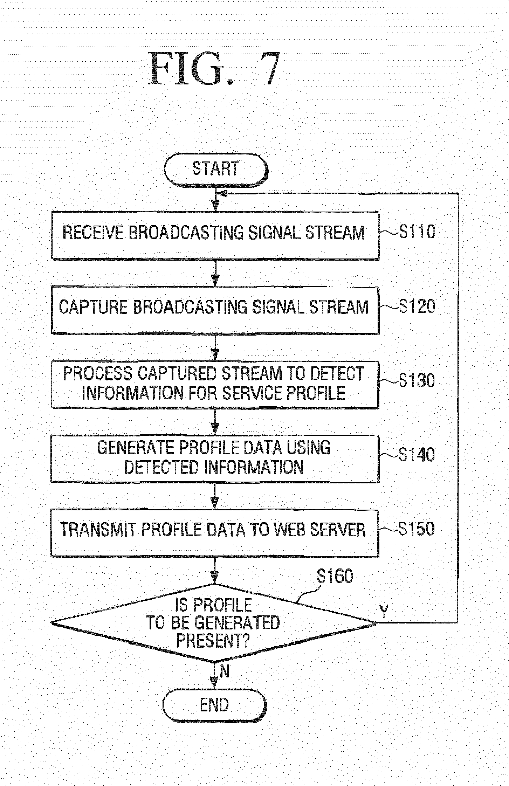

FIG. 7 is a flowchart illustrating a method of generating profile data in a stream capture server according to an exemplary embodiment.

The stream capture server 100 periodically receives a broadcasting signal stream from an antenna (S110). The stream capture server 100 performs a signal stream capture job for all profiles (S120). The stream capture server 100 processes the captured stream using software in the stream capture server 100 to detect information for each service profile (S130). The profile information may include at least one of channel list information, a channel number, a profile name, a version, a service providing parameter, a service number, EPG location information, detailed information of EPG data, and a software upgrade channel location.

The stream capture server 100 generates profile data using the detected information (S140) and transmits the generated profile data to the web server 200 (S150). The transmission of the profile data may be performed through a standard web protocol, such as for example, HTTP or SOAP. The stream capture server 100 receives a command for defining a new profile, and when there is a profile to be generated (S160), the stream capture server 100 iteratively performs the above-described process.

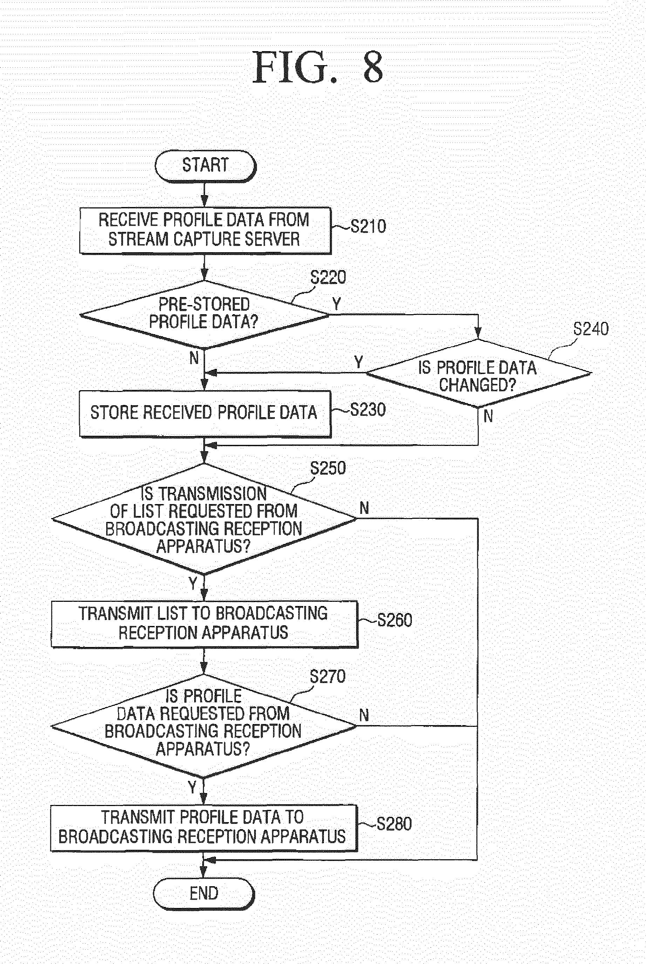

FIG. 8 is a flowchart illustrating a method of managing profile data in the web server according to an exemplary embodiment.

The web server 200 receives profile data from the stream capture server 100 (S210). The web server 200 checks whether or not the received profile data is pre-stored profile data (S220). When it is determined that the received profile data is new profile data, the web server 200 stores the received profile data in the storage (S230). When it is determined that the received profile data is the pre-stored profile data, the web server 200 checks whether or not the received profile data is changed profile data (S240). When it is determined that the received profile data is changed profile data, the web server 200 stores the received profile data in the storage (S230). The web server 200 then checks whether or not to request a profile list in the broadcasting reception apparatus 300 (S250). The web server 200 transmits a profile data list when it is determined that the request for the profile list from the broadcasting reception 300 apparatus is present (S260). The web server 200 checks whether or not to request a specific profile data after the web server 200 transmits the profile data list to the broadcasting reception apparatus 300 (S270). When it is determined that the request for the profile data is present, the web server 200 transmits the profile data to the broadcasting reception apparatus 300 (S280).

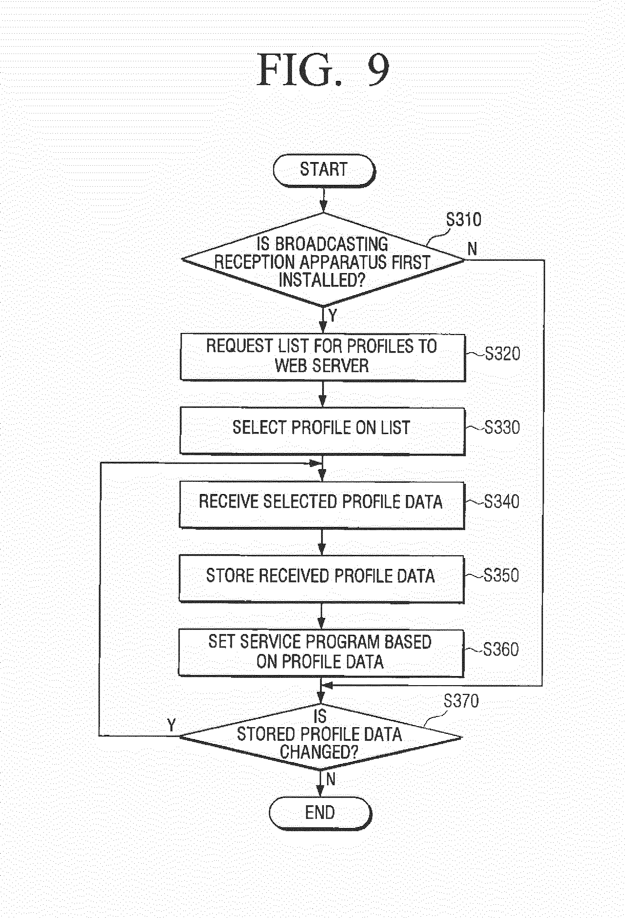

FIG. 9 is a flowchart illustrating a method of using profile data in the broadcasting reception apparatus according to an exemplary embodiment.

The broadcasting reception apparatus 300 checks whether or not the broadcasting reception apparatus 300 is initially installed and a pre-stored profile data is present (S310). When the pre-stored profile data is not present, the broadcasting reception apparatus 300 requests a profile list (S320). When the profile list is received from the web server 200, the broadcasting reception apparatus 300 receives a profile selection command (S330). The broadcasting reception apparatus 300 receives the profile data for the selected profile from the web server 200 (340), stores the received profile data (S350), and sets a service program based on the stored profile data (S360). The broadcasting reception apparatus 300 checks whether or not the stored profile data has changed (S370). When it is determined that the stored profile data has changed, the broadcasting reception apparatus requests and receives the changed profile data to and from the web server 200 (S340).

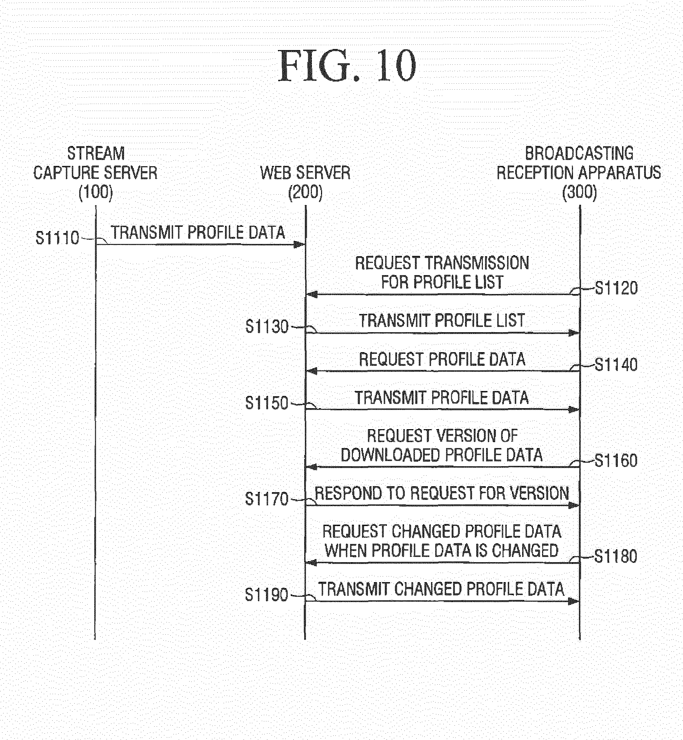

FIG. 10 is a flowchart illustrating control of a server-based profile managing system according to an exemplary embodiment.

The stream capture server 100 generates profile data and transmits the generated profile to the web server 200 (S1110). When the web server 200 receives a request for transmission of a profile list from the broadcasting reception apparatus 300 (S1120), the web server 200 transmits the profile list to the broadcasting reception apparatus 300 (S1130). When the web server 200 receives a request for transmission of profile data from the broadcasting reception apparatus 300 (S1140), the web server 200 transmits the profile data to the broadcasting reception apparatus 300 (S1150). The broadcasting reception apparatus 300 periodically queries the web server 200 regarding a version of the downloaded profile data (S1160). The web server 200 responds to the version request of the broadcasting reception apparatus 300 (S1170). When it is determined that a change in the pre-stored profile data is present, the broadcasting reception apparatus 300 requests the changed profile data from the web server 200 (S1180). The web server 200 then transmits the changed profile data to the broadcasting reception apparatus 300 (S1190). Therefore, it is possible to periodically check for a change in the profile data and update the profile data while the user is watching a broadcast.

According to another exemplary embodiment, when the broadcasting reception apparatus 300 is a digital video broadcasting (DVB) receiver, the stream capture server 100 may manage a satellite TV profile. The stream capture server 100 may be a general PC on which a satellite tuner card, which is directly connected to a low noise block down converter (LNB) disposed in a satellite dish, is mounted. A position tracking device is installed to capture a stream from various satellites. The stream capture server 100 can be operated by a window system and a TV tuner card is controlled by TSReader software. The TSReader may serve as a transport stream analyzer for an MPEG-2 system, a decoder, and a recorder, or may serve to adjust a stream.

A scheduling service may periodically perform a batch script which performs various activities. TSReader is called from a command for capturing a specific stream through a controller. The batch file calls a Python script which processes a stream for extracting a SI table for each profile having an extensible markup language (XML) form. The Python script processes an XML file for extracting all channel list data and an EPG location. The resulting data may be compared with previously opened data based on each profile, a data version may be added when a change is detected, and data may be uploaded in the web server using file transfer protocol (FTP). The data for each profile may include a profile name, a version, a service providing parameter, an XML file of a pre-defined form including a service number and an EPG barker channel location.

A server may access the XML files through the HTTP protocol. The profile name list is converted in a well-known uniform resource locator (URL) by the Python script which is present in a server, and is used to check a file list in an upload directory. The name of the XML file may be a name of an operator profile.

The TV receiver, which is initially installed, requests a list which can be displayed to the user from the web server. When profile data is selected, the XML file corresponding to the selected profile data is downloaded. The data is generated by inserting a service parameter into a service database and inserting a tuning parameter thereof into a transponder database, on the basis of the service list. The EPG barker channel location and the installed data version are stored together with the data. Then, the TV receiver performs a periodic test for a version of the new XML file. When new data is located, the TV receiver downloads the XML file and a channel list is updated together with other information by the TV receiver.

According to still another exemplary embodiment, profile data having information related to other networks may be extended and then processed in a certain transponder. As an example of the extended profile data, detailed information for a location of a software upgrade transponder or the kinds of EPG data may be processed.

The foregoing exemplary embodiments and advantages are merely exemplary and are not to be construed as limiting the inventive concept. The exemplary embodiments can be readily applied to other types of methods, systems and apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A stream capture server (100), comprising:
a receiver (110) which receives a broadcasting signal stream;
a controller (120) which captures the broadcasting signal stream to detect information for a service profile and generate profile data using the detected information; and
a transmitter (130) which transmits the generated profile data to a web server.

2. The stream capture server as claimed in claim 1, wherein the generated profile data includes at least one of channel list information, a channel number, a profile name, a version, a service providing parameter, a service number, EPG location information, detailed information of EPG data, and a software upgrade channel location.

3. The stream capture server as claimed in claim 1, further comprising an input unit which receives a command for defining a new profile,
wherein the controller classifies information for the profile according to the definition of the new profile to generate new profile data when the command is received.

4. A web server (200), comprising:
a communication unit (210) which receives profile data from a stream capture server which detects information for a service profile from a broadcasting signal stream to generate the profile data;
a storage (230) which stores the generated profile data; and
a controller (220) which transmits a profile list for the profile data stored in the storage to a broadcasting reception apparatus when a transmission request for the profile list is received from the broadcasting reception apparatus and which transmits selected profile data to the broadcasting reception apparatus when the profile data included in the profile list is selected in the broadcasting reception apparatus.

5. A broadcasting reception apparatus (300), comprising:
a signal receiver (310) which receives a broadcasting signal;
a signal processor (320) which processes the received broadcasting signal;
a communication unit (340) which requests and receives a list of profiles to and from a web server and requests profile data of a selected profile from the web server when at least one profile is selected on the list of profiles;
a storage (350) which stores received profile data when the profile data is received through the communication unit; and
a controller (330) which sets a service program based on the stored profile data.

6. The broadcasting reception apparatus as claimed in claim 5, wherein the controller generates a service data base including one of a service parameter, a tuning parameter, and an installed data version based on the profile data.

7. The broadcasting reception apparatus as claimed in claim 5, wherein the controller checks whether a previously installed profile data has changed and updates the profile data if the previously installed profile data has changed.

8. The broadcasting reception apparatus as claimed in claim 7, wherein the updating the profile data is performed while the broadcasting signal is received.

9. The broadcasting reception apparatus as claimed in claim 5, wherein the communication unit uses an external apparatus which is connectable to an Internet as an Internet gateway.

10. The broadcasting reception apparatus as claimed in claim 5, wherein the profile data includes at least one of channel list information, a channel number, a profile name, a version, a service providing parameter, a service number, EPG location information, detailed information of EPG data, and a software upgrade channel location.

11. A server-based profile managing system, comprising:
a stream capture server (100) which captures a received broadcasting signal stream to generate profile data and transmits the generated profile data to a web server;
the web server (200) which receives the profile data from the stream capture server, update the profile data in a new version, and transmits the profile data if requested by a broadcasting reception apparatus; and
the broadcasting reception apparatus (300) which requests and receives a selected profile data to and from the web server and sets a service program based on the received profile data.

12. A method of generating profile data, the method comprising:
receiving a broadcasting signal stream (S110) ;
capturing the broadcasting signal stream to detect information for a service profile (S120) and generating profile data using the detected information (S140); and
transmitting the profile data to a web server (S150).

13. The method as claimed in claim 12, further comprising:
receiving a command to define a new profile; and
classifying the information for the service profile according to a definition for the new profile to generate new profile data if the command to define the new profile is received.

14. A method of managing a profile based on a server, the method comprising:
capturing a broadcasting signal stream received in a stream capture server (100) to generate profile data and transmitting the generated profile data to a web server (200);
receiving the generated profile data from the stream capture server, updating the received profile data to a new version, and transmitting the profile data if requested by a broadcasting reception apparatus (300); and
requesting and receiving selected profile data to and from a web server, and setting a service program based on the received profile data.
